# EUROPÄISCHE PATENTSCHRIFT

(11) **EP 3 199 486 B1**
(45) Veröffentlichungstag und Bekanntmachung des Hinweises auf die Patenterteilung: **20.06.2018**
(21) Anmeldenummer: 16153100.9
(22) Anmeldetag: 28.01.2016
(51) Int. Cl.: B66F 11/04, B66F 17/00, G01C 25/00, G01C 9/02, G01L 5/00

(54) **KRANMECHANISMUS UND ARBEITSBÜHNE MIT LASTERFASSUNGSEINRICHTUNG UND INTEGRIERTEN NEIGUNGSSENSOR**
CRANE MECHANISM AND WORK PLATFORM WITH A LOAD MEASURING DEVICE AND AN INTEGRATED INCLINATION SENSOR
MÉCANISME DE GRUE ET PLATE-FORME DE TRAVAIL AVEC UN DISPOSITIF DE DETECTION DE CHARGE ET UN CAPTEUR D'INCLINAISON INTÉGRÉ

(43) Veröffentlichungstag der Anmeldung: 02.08.2017
(73) Patentinhaber: MOBA Mobile Automation AG, 65555 Limburg (DE)
(72) Erfinder: Zils, Boris, 65555 Limburg (DE); Volker, Harms, 65555 Limburg (DE)
(74) Vertreter: Zimmermann, Tankred Klaus

(56) Entgegenhaltungen:
- EP-A1- 1 378 482
- EP-A1- 1 382 562
- EP-A1- 1 466 862
- FR-A1- 3 000 200
- JP-A- 2001 180 898
- KR-A- 20130 062 118

## Beschreibung

Ausführungsbeispiele der vorliegenden Erfindung beziehen sich auf einen Kranmechanismus und eine Arbeitsbühne mit Lasterfassungseinrichtung und integriertem Neigungssensor. Im Allgemeinen liegt die Erfindung auf dem Gebiet von Hubarbeitsbühnen, z.B. hydraulische Hubarbeitsbühnen, die über einen Kran und einen LKW befestigt sind und im Regelfall mit einer sogenannten Lasterfassungseinrichtung ausgestattet sein müssen.

Bekannt sind beispielsweise Lasterfassungseinrichtungen gemäß der europäischen Patentanmeldung EP 1 382 562 A1, welche zwischen dem Kranmechanismus und der Arbeitsbühne angeordnet sind. Die Druckschrift EP 1 382 562 A1 offenbart was folgt: Kranmechanismus und Arbeitsbühne mit einer Belastungserfassungsvorrichtung, mit den folgenden Merkmalen: einem Kranmechanismus zum Bewegen der Arbeitsbühne, wobei der Kranmechanismus an einer Basis befestigbar ist, und einen verkippbaren Ausleger umfasst; und einer Wägezelle, die als einzige Verbindung zwischen dem verkippbaren Ausleger und der Arbeitsbühne angeordnet ist, wobei die Wägezelle einen Kraftsensor aufweist, der ausgebildet ist, eine Kraft, ein Seitenmoment und/oder einen Torsionsmoment zwischen dem Kranmechanismus und der Arbeitsbühne zu erfassen.

Weiterhin offenbaren die Patentanmeldungen EP 1 378 482 A1 sowie die EP 1 466 862 A1 jeweils eine Hubarbeitsbühne mit einem Teleskopausleger und einem an einem Ende des Teleskopauslegers angeordneten Arbeitskorb. In beiden Schriften werden Mechanismen vorgestellt, die ermöglichen, dass der Arbeitskorb im Wesentlichen parallel zu dem Boden verfahren werden kann.

Die Sicherheitsabschaltung auf Basis der Lasterfassung sowie die Neigungsregulierung sind voneinander getrennte Systeme, die jeweils im Regelfall zumindest einen Sensor im Arbeitskorb vorgesehen haben, so dass für jedes System eine eigene Verkabelung entlang des Auslegers bzw. des Teleskopauslegers notwendig ist. Dies erhöht in erster Linie den Montageaufwand bei der Herstellung von Hubarbeitsbühnen. Des Weiteren sind auch im Betrieb dicke Kabelstränge hinderlich. Deshalb besteht der Bedarf nach einem verbesserten Ansatz.

Aufgabe der vorliegenden Erfindung ist es, die elektrischen Schutz-, Überwachungs- und/oder Steuerungseinrichtungen besser zu integrieren.

Die Aufgabe wird durch die unabhängigen Patentansprüche gelöst.

Ausführungsbeispiele der vorliegenden Erfindung schaffen einen Kranmechanismus bzw. eine Arbeitsbühne mit einer Belastungserfassungsvorrichtung. Der Kranmechanismus zum Bewegen der Arbeitsbühne ist an einer Basis befestigbar und umfasst einen verkippbaren Ausleger. Die Belastungserfassungsvorrichtung umfasst eine Wägezelle. Die Wägezelle ist zwischen einem Kranmechanismus zum Bewegen der Arbeitsbühne und der Arbeitsbühne selbst angeordnet, so dass der Kranmechanismus die Arbeitsbühne vertikal und/oder horizontal bewegen sowie verkippen kann. Die Wägezelle ist als einzige Verbindung zwischen dem verkippbaren Ausleger und der Arbeitsbühne angeordnet. Die Wägezelle weist einen Kraftsensor und einen Neigungssensor auf. Der Kraftsensor ist ausgebildet, um eine Kraft, einen Seitenmoment und/oder einen Torsionsmoment zwischen dem Kranmechanismus und der Arbeitsbühne zu erfassen. Der Neigungssensor ist ausgebildet, eine Neigung der Arbeitsbühne, z.B. gegenüber dem Kranmechanismus oder als absolute Referenz gegenüber dem Erdboden, d.h. in Bezug auf die Erdanziehungskraft, zu ermitteln. Der Kraftsensor und der Neigungssensor weisen dabei ein gemeinsames Gehäuse auf.

Die Erkenntnis der vorliegenden Erfindung liegt also darin, dass erkannt wurde, dass die typischerweise vorhandene Wägezelle mit dem Kraftsensor immer zwischen Kranmechanismus und Arbeitsbühne, aber insbesondere fix gegenüber der Arbeitsbühne angeordnet ist, so dass in diese auch der Neigungssensor integriert werden kann, da sich die Wägezelle in Bezug auf die Neigung immer gleich mit der Arbeitsbühne verhält. Durch die Kombination dieser zwei Sensorikelemente können wichtige Synergieeffekte und dadurch Kostenersparnis erreicht werden. Schon alleine das Vorsehen der zwei Sensoren in einem gemeinsamen Gehäuse reduziert den Montageaufwand. Das Gehäuse bildet dabei entweder die Wägezelle selbst, denkbar ist jedoch auch, dass die beiden Sensorikelemente in einem separaten Gehäuse innerhalb der Wägezelle angeordnet sind. Weitere Vorteile ergeben sich in Hinblick auf die Detektion externer Fehler, wie nachfolgend noch erläutert werden wird.

Entsprechend den Ausführungsbeispielen umfasst die Belastungserfassungsvorrichtung einen oder mehrere Dehnungsmessstreifen zur Kraftmessung. Diese Dehnungsmessstreifen sind ausgebildet, um eine Spannung im aufgebrachten Material zu bestimmen und ausgehend hiervon ein Wert für die Belastung zwischen dem Kranmechanismus bzw. um dem Ausleger nahe zu sein und den Arbeitskorb zu bestimmen. Entsprechend Ausführungsbeispielen sind mehrere Dehnungsmessstreifen vorgesehen, so dass eine redundante Überwachung möglich ist.

Der Ausleger kann beispielsweise ein Teleskopausleger oder ein Festausleger sein, an welchem der verkippbare Ausleger zum Neigen der Arbeitsbühne angebracht ist. Dieser verkippbare Ausleger kann beispielsweise mit einem Nivellierzylinder betätigt werden. In Abhängigkeit von dem Neigungssensorsignal wird typischerweise der verkippbare Ausleger ausgerichtet, so dass die Arbeitsbühne im Wesentlichen parallel zum Boden bzw. sich im Wesentlichen senkrecht zu der Erdanziehung verhält.

Für die Ausführung des Neigungssensors gibt es unterschiedliche Varianten. Entsprechend dem ersten Ausführungsbeispiel kann der Neigungssensor vergleichbar mit einer Wasserwaage sein und eine Absolut-Neigung gegenüber der Erdanziehung, z.B. mittels eines kapazitiv überwachten Pendels, ermitteln. Alternativ hierzu kann entsprechend weiteren Ausführungsbeispielen der Neigungssensor auch als Winkelsensor ausgeführt sein, der die Verkippung zwischen dem Teleskopausleger/festen Ausleger und dem verkippbaren Ausleger bestimmt.

Entsprechend bevorzugten Ausführungsbeispielen wird, insbesondere um den Verkabelungsaufwand zu reduzieren, sowohl der Kraftsensor als auch der Neigungssensor mit einer gemeinsamen Signalleitung und/oder sogar einer gemeinsamen Energieversorgung angesteuert.

Wie oben bereits erläutert, kann entsprechend Ausführungsbeispielen der Kraftsensor redundant ausgeführt sein. Entsprechend Ausführungsbeispielen ist es ebenso möglich, den Neigungssensor redundant auszuführen. Entsprechend bevorzugten Ausführungsbeispielen kann so innerhalb der Lasterfassungseinrichtung pro "Kanal" nur noch eine Stromversorgung (Netzteil) sowie ein Mikrocontroller für die Auswertung der Sensormesswerte vorgesehen sein. All diese Maßnahmen haben einerseits Vorteile im Hinblick auf eine Reduzierung des Verkabelungsaufwands (d.h. des Montageaufwands) an der Maschine. Nicht nur der Aufwand an sich, sondern auch die Verkabelung wird vereinfacht, was die gesamte Komplexität reduziert.

Entsprechend weiteren Ausführungsbeispielen kann die Wägezelle mit einer Auswerteeinheit verbunden sein, die Teil der Belastungserfassungsvorrichtung ist. An dieser Stelle sei angemerkt, dass die Auswerteeinheit nicht zwingend in der Wägezelle angeordnet sein muss. Dadurch, dass sowohl der eine oder die mehreren Kraftsensoren oder der eine oder mehrere Neigungssensoren mit einer Auswerteelektronik, die in der ein und derselben Auswerteeinheit beherbergt ist, ausgewertet werden, ist es auch möglich, all diese Sensoren gleichzeitig zu kalibrieren. Deshalb kann entsprechend weiteren Ausführungsbeispielen die Auswerteeinheit dazu ausgebildet sein, ein gemeinsames Kalibrierverfahren, z.B. zur Kalibrierung des Temperaturverhaltens für alle Sensoren durchzuführen. Dies spart sowohl bei der Herstellung als auch im Betrieb Kosten für Personal und Gerät.

Entsprechend zusätzlichen Ausführungsbeispielen kann der Neigungssensor auch als Beschleunigungssensor ausgeführt sein. Hieraus ergibt sich der Vorteil, dass auch eine Beschleunigung der Arbeitsbühne erfasst werden kann, um hieraus auf einen externen Fehler (bspw. ein Überfahren eines Borsteines mit hieraus resultierendem Auf- und Abschwingen bzw. Hin- und Herbewegen des Kranmechanismus und der Arbeitsbühne) zu schließen. Deshalb kann die Auswerteeinheit derart ausgebildet sein, bei einer mittels des Kraftsensors erfassten Laständerung und einer gleichzeitig mittels des Beschleunigungssensors erfassten Beschleunigung, einen externen Fehler zu erkennen und ausgehend hiervon die Sensoren in eine Art Latenzzustand zu versetzen und deren Signal für eine gewisse Zeitspanne (0,5s oder 1s) zu ignorieren.

Weiterbildungen sind in den Unteransprüchen definiert. Ausführungsbeispiele der vorliegenden Erfindung werden anhand der beiliegenden Zeichnungen erläutert. Es zeigen:
- Fig. 1: ein schematisches Blockschaltbild einer Belastungserfassungsvorrichtung für einen Kranmechanismus bzw. eine Arbeitsbühne gemäß Ausführungsbeispielen;
- Fig. 2a-2d: schematische dreidimensionale Abbildungen von einem Kranmechanismus, einer Arbeitsbühne und einer dazwischen angeordneten Wägezelle, die den Kraftsensor und den Neigungssensor umfasst, gemäß Ausführungsbeispielen; und
- Fig. 3: schematische Abbildung einer Belastungserfassungsvorrichtung gemäß erweiterten Ausführungsbeispielen.

Bevor nachfolgend Ausführungsbeispiele der vorliegenden Erfindung und der Figuren im Detail erläutert werden, sei darauf hingewiesen, dass gleiche Elemente und Strukturen mit gleichen Bezugszeichen versehen sind, so dass die Beschreibung derer aufeinander anwendbar bzw. austauschbar ist.

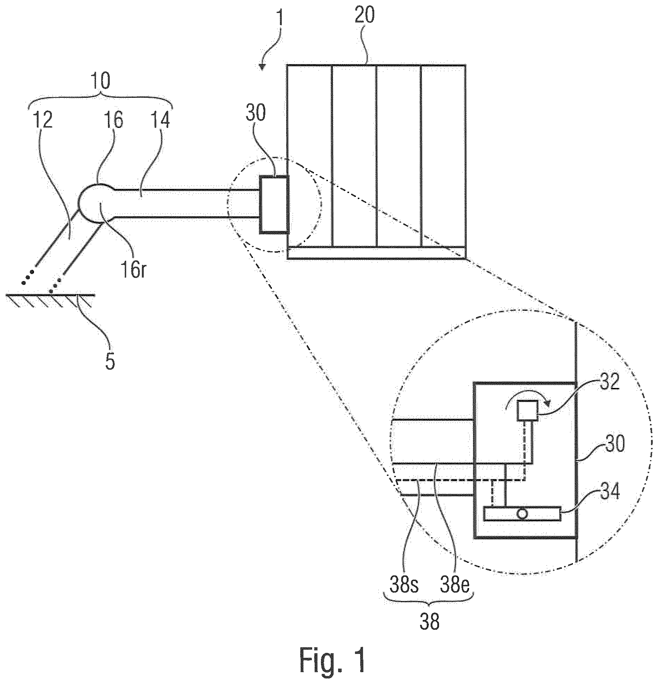

Fig. 1 zeigt einen Kranmechanismus 10 mit einem Arbeitskorb 20 und einer zwischen dem Kranmechanismus 10 und dem Arbeitskorb 20 angeordneten Wägezelle 30, die Belastungserfassungseinrichtung 1 bildet. Der Kranmechanismus 10 kann an einer Basis 5, z.B. einem fahrbaren Anhänger oder Sattelzug, (kippbar oder drehbar) befestigt sein.

Der Kranmechanismus 10 umfasst in diesem Ausführungsbeispiel einen (festen) Ausleger 12, der mit einem kippbaren Ausleger 14 über ein Gelenk 16 verbunden ist. Das Gelenk 16 ermöglicht eine Verkippung des verkippbaren Auslegers 14 und damit auch des Korbes 20 sowie der Wägezelle 30 gegenüber dem Ausleger 12 um die Rotationsachse 16a. Da heißt also im Umkehrschluss, dass wenn der Korb 20 verkippt wird, auch die Wägezelle 30 eine entsprechende Verkippung erfährt.

Die Wägezelle 30 ist zwischen dem Korb 20 und dem verkippbaren Ausleger 14 angeordnet und folglich ausgebildet, Biegemomente oder Scherkräfte bzw. auch Druckkräfte zwischen dem Ausleger 14 und dem Arbeitskorb 20 zu ermitteln. Nachfolgend wird anhand der Vergrößerungsdarstellung der Wägezelle 30 sowohl der Kraftsensor 32 als auch der Neigungssensor 34 erläutert.

Der Kraftsensor 32 basiert beispielsweise auf der Ermittlung einer Verformung der Wägezelle 30 bzw. des Gehäuses oder eine anderes Verformungsgerät der Wägezelle 30. Die Verformung wird über einen Dehnungsmessstreifen (resistiver Kraftaufnehmer) oder einen anderen Kraftaufnehmer, wie z.B. einen Piezo-Kraftaufnehmer bestimmt und als Maß für die Belastung herangezogen, da die Verformung in (direkter) Abhängigkeit von der auf den Arbeitskorb 20 lastenden Last ist. Die Verformung ist also von der Beladung des Korbes 20 abhängig, wobei auch die Materialparameter des Verformungskörpers berücksichtigt werden müssen. Deshalb wird in einem Kalibriervorgang der Wägezelle bzw. des Verformungskörpers diese Abhängigkeit zwischen der Belastung und der Verformung des Verformungskörpers vorab bestimmt.

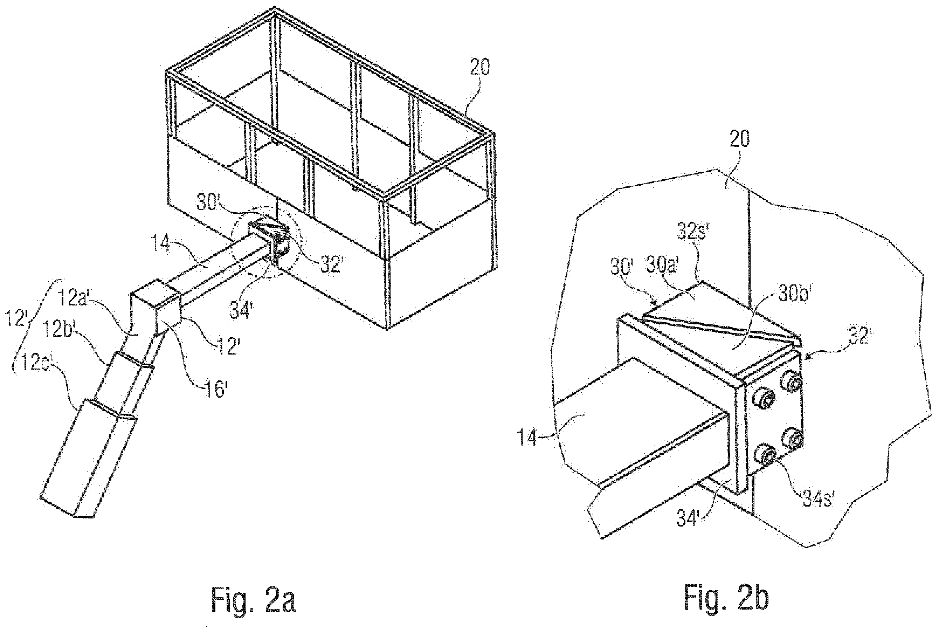

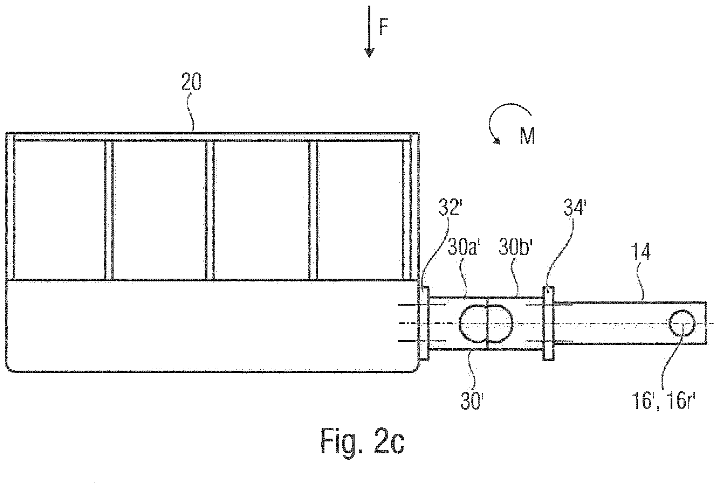

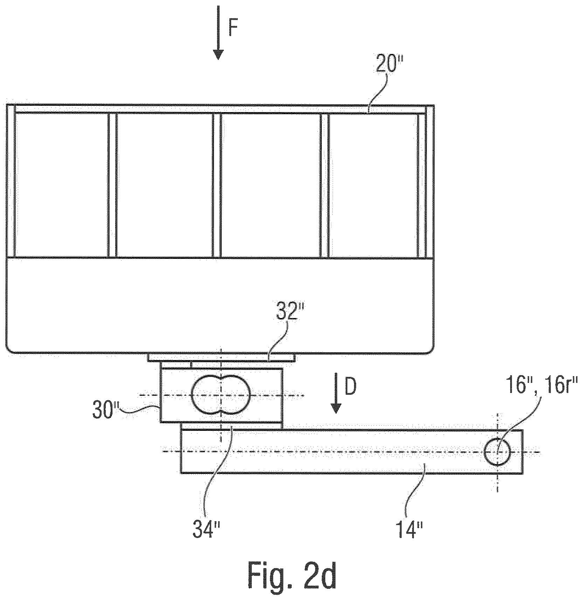

An dieser Stelle sei angemerkt, dass es je nachdem, wie die Wägezelle (seitlich oder unterhalb) gegenüber dem Arbeitskorb angeordnet ist, unterschiedliche Verformungskörper gibt, da hiervon abhängig ist, ob es sich um eine Torsion oder Druckkraft handelt. Beispiele für derartige Verformungskörper sind S-förmige Federkörper, Biegebalken oder Ringtorsionsfedern, wie weiter in Fig. 2 erläutert werden wird.

Zusätzlich ist in die Wägezelle 30 auch der Neigungssensor 34 integriert. Der Neigungssensor 34 kann beispielsweise gegenüber der Horizontalen und/oder der Vertikalen der Wägezelle 30 bzw. des Arbeitskorbes 20 angeordnet sein. Da die Lasterfassungseinrichtung 30 bzw. die Wägezelle 30 fest mit dem Korb 20 verbunden ist, wird mit dem Neigungssensor der Lasterfassungseinrichtung der gleiche Neigungswinkel gemessene wie bei einem separaten Neigungssensor. Dieser Neigungssensor 34 erfasst also die Neigung der Wägezelle 30 und damit auch die Neigung des Arbeitskorbes 20, so dass diese beispielsweise mittels des Kranmechanismus ausgeglichen werden kann. Der Neigungssensor 34 kann beispielsweise einen einem Lot nachempfundenen Körper umfassen, der elektronisch, induktiv, kapazitiv oder optisch überwacht wird, um so seine Lage in Bezug auf die Schwerkraft zu ermitteln. Des Weiteren sind auch flüssigkeitsbasierte Systeme, die also eine Wasserwaage nachempfinden, bekannt.

Entsprechend Ausführungsbeispielen ist die Sensorik 32-34 der Wägezelle 30 mit einer gemeinsamen Leitung 38 verbunden, über welche die beiden Sensoren 32 und 34 gemeinsam mit Energie versorgt werden (vgl. Bezugszeichen 38E). Des Weiteren kann alternativ oder additiv zu der Energieleitung 38E auch eine Signalleitung 38S in dem Signalkörper 38 vorgesehen sein, über welche die mittels der Sensoren 32-34 ermittelten Signale weiteren Einrichtungen, wie z.B. der Steuerungseinrichtung der Hubarbeitsbühne bereitgestellt werden.

Nachfolgend werden Bezug nehmend auf Fig. 2a-d unterschiedliche Positionen der Wägezelle gegenüber dem Arbeitskorb 20 erläutert.

Fig. 2a bis 2c illustrieren die seitliche Anordnung einer Wägezelle 30' in Bezug auf den Arbeitskorb 20. Der Vollständigkeit halber sei darauf hingewiesen, dass die Wägezelle 30' sowohl den Kraftsensor (hier beispielsweise ein Biegebeckensensor) als auch den Neigungssensor (hier beispielsweise ein Lotsensor) umfasst.

Die Wägezelle 30' umfasst einen ersten Flansch 32' für den Arbeitskorb sowie einen zweiten Flansch 34' für den beweglichen Ausleger 14. Die beiden Flansche 34' und 32' sind mittels sogenannten Winkelblechen ausgeführt, so dass die Verschraubung seitlich erfolgen kann (vgl. Bezugszeichen 34s' und 32s'). Jeder Flansch 32' und 34' ist also seitlich über die Verschraubungen 32s' bzw. 34s' mit einer Hälfte 30a' bzw. 30b' der Wägezelle verbunden.

Die zwei Hälften 30a' und 30b' sind über ein Verformungselement (nicht dargestellt), in welchem die eigentliche Kraftsensoren (DMS) angeordnet sind, miteinander verbunden. Wie insbesondere aus Fig. 2c hervorgeht, resultiert aus einer Kraft F auf den Arbeitskorb 20 eine Verbiegung der Wägezelle 30' (vgl. Biegemoment M) im Bereich zwischen den zwei Hälften 30a' und 30b'. Das Biegemoment M ist mittels des Kraftsensors bestimmbar, woraus wiederum (entweder rechnerisch oder auf Basis von empirischen Werten) auf die Kraft F geschlossen werden kann.

Der hier in Fig. 2c dargestellte waagrechte Korb kann um das Drehgelenk 16', bzw. um genauer zu sein, um die Rotationsachse 16R' gekippt werden. Hierzu erfolgt eine Verkippung des kippbaren Auslegers 14 gegenüber dem Ausleger 12', der in diesem Ausführungsbeispiel als Teleskopausleger (vgl. Teleskopelemente 12a', 12b' und 12c') ausgebildet ist. Diese Verkippung bzw. Neigung wird mittels des Neigungssensors, der Bezug nehmend auf Fig. 1 erläutert wurde, bestimmt, so dass beispielsweise mit einem hydraulischen Nivellierungszylinder, im Bereich des Gelenks 16' angeordnet ist, die Neigung ausgeglichen werden kann.

Diese Steuerung der Neigung ausgehend von den Sensorsignalen erfolgt indes einer Steuerung, die mit der Auswerteeinheit der Belastungserfassungsvorrichtung verbunden ist. An dieser Stelle sei angemerkt, dass sowohl die Steuerung als auch die Belastungsauswertevorrichtung in bevorzugter Weise nicht am Ausleger oder dem Arbeitskorb, sondern auf der (Fahrzeug) Basis der Arbeitsbühne angeordnet sind.

Fig. 2d zeigt einen Arbeitskorb 20", der über eine unterhalb dem Arbeitskorb 20" vorgesehene Wägezelle 30" mit dem Ausleger 14" verbunden ist. Die Verbindung erfolgt über die zwei Flansche 32" auf Seiten des Arbeitskorbs 20" und 34" auf Seiten des Auslegers 14".

Dadurch, dass Ausleger 14", Wägezelle 30" und Korb 20" aufeinander gestapelt sind, erfolgten bei der Belastung des Arbeitskorbes 20 (vgl. Pfeil F) eine Druckkraft (vgl. Pfeil D) auf die Wägezelle 30". Infolgedessen wird diese Druckkraft D als Maß für die Belastung F genommen. Die Wägezelle 30" umfasst selbstverständlich wieder die Neigung zum Sensor (nicht dargestellt), der die Neigung der Wägezelle 30", die aufgrund der festen Verbindung zu dem Korb 20" und dem Ausleger 14" dieselbe ist. Der Vollständigkeit halber sei angemerkt, dass der Ausleger 14" wiederum um das Gelenk 16" bzw. den Drehpunkt 16R" kippbar ist.

Entsprechend weiteren Ausführungsbeispielen umfasst die Belastungserfassungsvorrichtung, wie oben bereits angedeutet eine Auswerteeinheit, die mit der Wägezelle und insbesondere mit den zwei Sensoren 32 und 34 (vgl. Fig. 1) der Wägezelle 30 verbunden ist. Entsprechend weiteren Ausführungsbeispielen kann die Auswerteeinheit dazu ausgebildet sein, die beiden Sensoren gleichzeitig zu erfassen. Dabei kann die Auswerteeinheit auch in dem gleichen Gehäuse angeordnet sein, in welchem die beiden Sensorikelemente Kraftsensor und Neigungssensor angeordnet sind. D. h., bildet die Wägezelle selbst das Gehäuse, so kann neben den beiden Sensorikelementen auch die Auswerteeinheit innerhalb der Wägezelle angeordnet sein. Sind jedoch die beiden Sensorikelemente in einem separaten Gehäuse innerhalb der Wägezelle angeordnet, kann auch die Auswerteeinheit innerhalb dieses Gehäuses angeordnet sein.

Entsprechend bevorzugten Ausführungsbeispielen ist es auch möglich, dass zumindest der Kraftsensor oder der Neigungssensor, bevorzugt aber beide Sensoren redundant ausgeführt sind.

Auch wenn bei den obigen Ausführungsbeispielen davon ausgegangen wurde, dass mittels des Kraftsensors ein Biegemoment oder eine Druckkraft ermittelt wird, um die Belastung auf den Arbeitskorb zu bestimmen, sei an dieser Stelle angemerkt, dass auch weitere Kräfte, wie z.B. ein Seitenmoment oder ein Torsionsmoment aussagekräftig in Bezug auf eine Belastung auf dem Arbeitskorb sind, wenn diese entsprechend zwischen dem Ausleger und dem Arbeitskorb angeordnet sind.

Auch wenn bei obigen Ausführungsspeispielen von der Nutzung von Dehnungsmessstreifen als Kraftsensoren ausgegangen wurde, sei darauf hingewiesen, dass auch andere Messprinzipien eingesetzt werden könnten. Ein Beispiel hierfür ist das sogenannte Schwingsaiten-Messprinzip. Mit einem Schwingsaiten-Lastmesser können Größen gemessen werden, die sich auf die Spannkraft einer Saite (z.B. auf eine in der Messzelle gespannte Saite zur Ermittlung einer Last auf die Messzelle) übertragen lassen. Hierzu wird die Saite in der Messzelle zur Schwingung angeregt, wobei sich die Saite infolge einer Belastung durch die zu messende Kraft verstimmt, so dass ausgehend von der veränderten Eigenfrequenz der Saite die Belastung auf selbe ermittelt werden kann.

Entsprechend Ausführungsbeispielen kann Bezug nehmend auf Fig. 1 auch an Stelle des absoluten Neigungssensors 34 ein relativer Neigungssensor vorgesehen sein, der mit dem Gelenk 16 gekoppelt ist und den Verkippungswinkel zwischen dem Ausleger 12 und dem verkippbaren Ausleger 14 ermittelt.

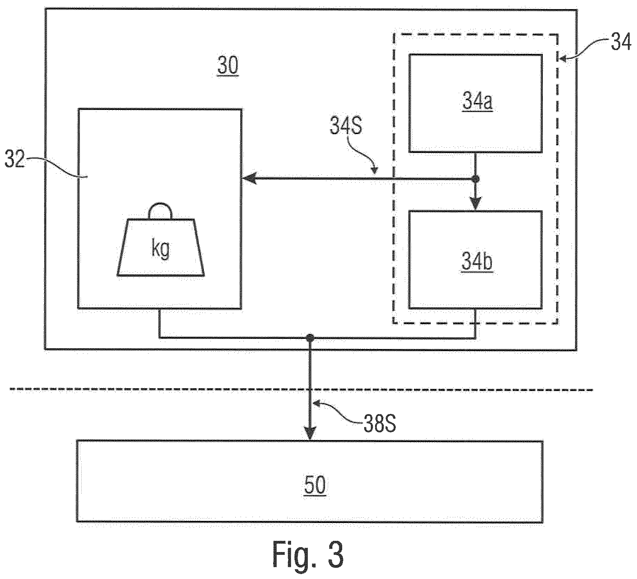

Ausgehend von der Kombination von Lastsensor und Neigungssensor ergibt sich entsprechend weiteren Ausführungsbeispielen eine weitere Anwendung, die bezugnehmend auf Fig. 3 erläutert wird. Hierbei sei davon ausgegangen, dass es sich bei einem Neigungsgeber um einen Beschleunigungssensor handelt, der in erster Linie dazu ausgebildet ist, eine auf das oder die Sensorelemente einwirkende Beschleunigung als Neigungsveränderung zu detektieren, aber auch zusätzlich eine Beschleunigung in zumindest einer Raumrichtung detektieren kann.

Bei der derzeit eingesetzten Lastmesszelle (ohne integrierten Neigungssensor) wird eine Gewichtsänderung (ggf. auch eine Überlast) auch dann erkannt, wenn die Bühne während des Betriebs bewegt wird, bspw. über einen Bordstein fährt. Der Teleskopauslegerarm kommt dann ins Schwingen, wodurch eine Gewichtsänderung des Korbs angezeigt wird, obwohl das Gewicht des Korbs gleich geblieben ist. Der am Teleskoparm angeordnete Neigungsgeber wird in solch einem Fall nur eine minimale bzw. keine Neigungsänderung anzeigen, da der gemessene Neigungswert beschleunigungskompensiert ausgegeben wird, d. h. eine Beschleunigung, die auf den Neigungssensor wirkt, wird herausgefiltert.

Das gleiche Problem wie beim Überfahren des Bordsteins tritt auch beim Aus- und Einfahren des Teleskopauslegerarms auf, da hier bis zum Erreichen einer gleichmäßigen Verfahrgeschwindigkeit eine Beschleunigung auf die Lastmesszelle wirkt. Bis dato werden solch auftretende Laständerungen durch eine Maschinensteuerung so gelöst, dass eine Lastveränderung erst dann sicher erkannt werden kann, wenn diese über eine Zeit x ansteht, d. h. bspw. mehrere Sekunden vorhanden ist. Erst dann kann mit hoher Wahrscheinlichkeit von einer Gewichtsänderung bzw. von einer Überlast ausgegangen werden. Die Fehlerreaktionszeit des Systems erhöht sich dadurch jedoch signifikant.

Durch eine Integration des Neigungssensors in die Wägezelle kann der Einfluss der Beschleunigung, die auf die Wägezelle wirkt, eliminiert werden, wie anhand von Fig. 3 erläutert wird.

Fig. 3 zeigt ein schematisches Blockschaltbild der Wägezelle 30 mit integriertem Neigungssensor 34. Mit Bezugszeichen 34a sind hierbei ein oder mehrere Sensorelemente zur Neigungs- und Beschleunigungsmessung dargestellt. Vorzugsweise werden hier zwei um 90 Grad versetzte MEMS-Sensoren eingesetzt, welche allerdings eine Neigung in nur einer Achse messen. Der Rohmesswert ist somit das noch nicht beschleunigungskompensierte Signal. Eine Kompensation erfolgt erst durch das nachgeschaltete Filter 34b. Der Rohmesswert wird über die Signalleitung 34S dem Kraftsensor 32 zugeführt, welcher dann aus diesem Signal ableiten kann, ob eine Beschleunigung auf die Wägezelle 30 einwirkt (bspw. durch Überfahren eines Bordsteins etc.) oder ob es sich um eine tatsächliche Gewichtsänderung des Korbes handelt. Der beschleunigungskompensierte Neigungswert wird über die gemeinsame Signalleitung 38S an die Auswerteeinheit 50 gesendet.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kranmechanismus und Arbeitsbühne mit einer Belastungserfassungsvorrichtung (1), mit folgenden Merkmalen:
einem Kranmechanismus (10) zum Bewegen der Arbeitsbühne (20), wobei der Kranmechanismus (10) an einer Basis befestigbar ist, und einen verkippbaren Ausleger (14, 14") umfasst; und
einer Wägezelle (30, 30', 30"), die als einzige Verbindung zwischen dem verkippbaren Ausleger (14, 14") und der Arbeitsbühne (20) angeordnet ist, wobei
die Wägezelle (30, 30', 30") einen Kraftsensor (32) aufweist, der ausgebildet ist, eine Kraft, ein Seitenmoment und/oder einen Torsionsmoment zwischen dem Kranmechanismus (10) und der Arbeitsbühne (20) zu erfassen; und
einem Neigungssensor (34), der ausgebildet ist, eine Neigung der Arbeitsbühne (20) zu erfassen, wobei
der Kraftsensor (32) und der Neigungssensor (34) ein gemeinsames Gehäuse aufweisen.

2. Kranmechanismus und Arbeitsbühne mit einer Belastungserfassungsvorrichtung (1) gemäß Anspruch 1, wobei der Kraftsensor (32) ein oder mehrere Dehnungsmessstreifen umfasst.

3. Kranmechanismus und Arbeitsbühne mit einer Belastungserfassungsvorrichtung (1) gemäß einem der vorherigen Ansprüche, wobei der Kranmechanismus (10) einen Ausleger (12) und zumindest ein Drehgelenk (16') umfasst.

4. Kranmechanismus und Arbeitsbühne mit einer Belastungserfassungsvorrichtung (1) gemäß Anspruch 3, wobei der Ausleger (12) ein Teleskop-Ausleger (12') oder ein fester Ausleger (12) ist, der über das Drehgelenk (16') mit dem verkippbaren Ausleger (14, 14") verbunden ist.

5. Kranmechanismus und Arbeitsbühne mit einer Belastungserfassungsvorrichtung (1) gemäß Anspruch 4, wobei zwischen dem Teleskop-Ausleger (12') oder dem festen Ausleger (12) und dem verkippbaren Ausleger (14, 14") ein Nivellierzylinder vorgesehen ist, der dazu ausgebildet ist, den verkippbaren Ausleger (14, 14") gegenüber dem Teleskop-Ausleger (12') oder dem festen Ausleger (12) zu verkippen.

6. Kranmechanismus und Arbeitsbühne mit einer Belastungserfassungsvorrichtung (1) gemäß einem der vorherigen Ansprüche, wobei der Neigungssensor (34) ein Beschleunigungssensor ist und/oder ausgebildet ist, um die Neigung in Relation zu der Erdoberfläche und/oder in Bezug auf die Erdanziehungskraft zu ermitteln.

7. Kranmechanismus und Arbeitsbühne mit einer Belastungserfassungsvorrichtung (1) gemäß einem der Ansprüche 4 oder 5, wobei der Neigungssensor (34) ein Winkelsensor ist, der ausgebildet ist, um einen Kippwinkel zwischen dem Teleskop-Ausleger (12') oder dem festen Ausleger (12) und dem verkippbaren Ausleger (14, 14") zu ermitteln.

8. Kranmechanismus und Arbeitsbühne mit einer Belastungserfassungsvorrichtung (1) gemäß einem der vorherigen Ansprüche, wobei die Wägezelle (30, 30', 30") unterhalb oder seitlich zu der Arbeitsbühne angeordnet ist und fest mit der Arbeitsbühne verbunden ist, so dass sie zusammen mit dem Arbeitskorb (20, 20") verkippt wird.

9. Kranmechanismus und Arbeitsbühne mit einer Belastungserfassungsvorrichtung (1) gemäß einem der vorherigen Ansprüche, wobei der Kraftsensor (32) und der Neigungssensor (34) mit einer gemeinsamen Signalleitung (38S) und/oder mit einer gemeinsamen Energieversorgungsleitung (38E) mit einer Auswerteeinheit verbunden sind.

10. Kranmechanismus und Arbeitsbühne mit einer Belastungserfassungsvorrichtung (1) gemäß einem der vorherigen Ansprüche, wobei der Kraftsensor (32) und/oder der Neigungssensor (34) redundant in der Wägezelle (30, 30', 30") vorgesehen sind.

11. Kranmechanismus und Arbeitsbühne mit einer Belastungserfassungsvorrichtung (1) gemäß Anspruch 10, wobei ein erster der redundant vorhandenen Kraftsensoren (32) und ein erster der redundant vorhandenen Neigungssensoren (32) über eine gemeinsame Signalleitung (38S) und/oder eine gemeinsame Energieversorgungsleitung (38E) mit einer Auswerteeinheit und/oder einer gemeinsamen Energieversorgungseinheit verbunden sind, und
wobei ein zweiter der redundant vorhandenen Kraftsensoren (32) und ein zweiter der redundant vorhandenen Neigungssensoren (34) über eine gemeinsame Signalleitung (38S) und/oder eine gemeinsame Energieversorgungsleitung (38E) mit der Auswerteeinheit und/oder einer gemeinsamen Energieversorgungseinheit verbunden sind.

12. Kranmechanismus und Arbeitsbühne mit einer Belastungserfassungsvorrichtung (1) gemäß einem der vorherigen Ansprüche, wobei die Belastungserfassungsvorrichtung (1) eine Auswerteeinheit zur Auswertung des Kraftsensors (32) und des Neigungssensors (34) umfasst.

13. Kranmechanismus und Arbeitsbühne mit einer Belastungserfassungsvorrichtung (1) gemäß Anspruch 12, wobei die Auswerteeinheit ausgebildet ist, in einem gemeinsamen Kalibriervorgang sowohl den Kraftsensor (32) als auch den Neigungssensor (34) zu kalibrieren.

14. Kranmechanismus und Arbeitsbühne mit einer Belastungserfassungsvorrichtung (1) gemäß Anspruch 6, wobei die Belastungserfassungsvorrichtung (1) eine Auswerteeinheit zur Auswertung des Kraftsensors (32) und des Beschleunigungssensors als Neigungssensors (34) umfasst und wobei die Auswerteeinheit ausgebildet ist, bei einer gleichzeitig auftretenden mittels des Kraftsensor (32) erfassten Laständerung und mittels des Beschleunigungssensors erfassten Beschleunigung einen externen Fehler zu erkennen.

## Claims

1. Crane mechanism and work platform with a load detection apparatus (1), comprising:
a crane mechanism (10) for moving the work platform (20), wherein the crane mechanism (10) can be mounted on a base and includes a tiltable boom (14, 14"); and
a load cell (30, 30', 30") which is arranged as only connection between the tiltable boom (14, 14") and the work platform (20), wherein
the load cell (30, 30', 30") comprises a force sensor (32) that is configured to detect a force, a lateral or yaw moment and/or a torsional moment between the crane mechanism (10) and the work platform (20); and
an inclination sensor (34) that is configured to detect an inclination of the work platform (20), wherein
the force sensor (32) and the inclination sensor (34) comprise a common housing.

2. Crane mechanism and work platform with a load detection apparatus (1) according to claim 1, wherein the force sensor (32) includes one or several strain gauges.

3. Crane mechanism and work platform with a load detection apparatus (1) according to one of the preceding claims, wherein the crane mechanism (10) includes a boom (12) and at least one hinge joint (16').

4. Crane mechanism and work platform with a load detection apparatus (1) according to claim 3, wherein the boom (12) is a telescopic boom (12') or a fixed boom (12) which is connected to the tiltable boom (14, 14") via the hinge joint (16').

5. Crane mechanism and work platform with a load detection apparatus (1) according to claim 4, wherein a levelling cylinder is provided between the telescopic boom (12') or the fixed boom (12) and the tiltable boom (14, 14"), which is configured to tilt the tiltable boom (14, 14") with regard to the telescopic boom (12') or the fixed boom (12).

6. Crane mechanism and work platform with a load detection apparatus (1) according to one of the preceding claims, wherein the inclination sensor (34) is an acceleration sensor and/or is configured to determine the inclination in relation to the ground and/or in relation to gravity.

7. Crane mechanism and work platform with a load detection apparatus (1) according to one of claims 4 or 5, wherein the inclination sensor (34) is an angle sensor that is configured to determine a tilting angle between the telescopic boom (12') or the fixed boom (12) and the tiltable boom (14, 14").

8. Crane mechanism and work platform with a load detection apparatus (1) according to one of the preceding claims, wherein the load cell (30, 30', 30") is disposed below or on the side of the work platform and is firmly connected to the work platform such that the same is tilted together with the work cage (20, 20").

9. Crane mechanism and work platform with a load detection apparatus (1) according to one of the preceding claims, wherein the force sensor (32) and the inclination sensor (34) are connected via a common signal line (38S) and/or via a common energy supply line (38E) to an evaluation unit.

10. Crane mechanism and work platform with a load detection apparatus (1) according to one of the preceding claims, wherein the force sensor (32) and/or the inclination sensor (34) are provided in the load cell (30, 30', 30") in a redundant manner.

11. Crane mechanism and work platform with a load detection apparatus (1) according to claim 10, wherein a first one of the force sensors (32) provided in a redundant manner and a first one of the inclination sensors (32) provided in a redundant manner are connected via a common signal line (38S) and/or via a common energy supply line (38) to an evaluation unit and/or a common energy supply unit, and
wherein a second one of the force sensors (32) provided in a redundant manner and a second one of the inclination sensors (34) provided in a redundant manner are connected via a common signal line (38S) and/or a common energy supply line (38E) to the evaluation unit and/or a common energy supply unit.

12. Crane mechanism and work platform with a load detection apparatus (1) according to one of the preceding claims, wherein the load detection apparatus (1) includes an evaluation unit for evaluating the force sensor (32) and the inclination sensor (34).

13. Crane mechanism and work platform with a load detection apparatus (1) according to claim 12, wherein the evaluation unit is configured to calibrate both the force sensor (32) and the inclination sensor (34) in a common calibration process.

14. Crane mechanism and work platform with a load detection apparatus (1) according to claim 6, wherein the load detection apparatus (1) comprises an evaluation unit for evaluating the force sensor (32) and the acceleration sensor as inclination sensor (34) and wherein the evaluation unit is configured to detect an external error during a simultaneously occurring load change detected by means of the force sensor (32) and an acceleration detected by means of the acceleration sensor.

## Revendications

1. Mécanisme de grue et plate-forme de travail avec un dispositif de détection de charge (1), aux caractéristiques suivantes:
un mécanisme de grue (10) destiné à déplacer la plate-forme de travail (20), le mécanisme de grue (10) pouvant être fixé à une base, et comportant une flèche inclinable (14, 14"); et
une cellule de charge (30, 30', 30") qui est disposée comme connexion unique entre la flèche inclinable (14, 14") et la plate-forme de travail (20), où
la cellule de charge (30, 30', 30") comprend un capteur de force (32) configuré pour détecter une force, un couple latéral et/ou un couple de torsion entre le mécanisme de grue (10) et la plate-forme de travail (20); et
un capteur d'inclinaison (34) qui est configuré pour détecter une inclinaison de la plate-forme de travail (20), où
le capteur de force (32) et le capteur d'inclinaison (34) présentent un boîtier commun.

2. Mécanisme de grue et plate-forme de travail avec un dispositif de détection de charge (1) selon la revendication 1, dans lequel le capteur de force (32) comporte une ou plusieurs jauges de contrainte.

3. Mécanisme de grue et plate-forme de travail avec un dispositif de détection de charge (1) selon l'une des revendications précédentes, dans lequel le mécanisme de grue (10) comporte une flèche (12) et au moins une articulation rotative (16').

4. Mécanisme de grue et plate-forme avec un dispositif de détection de charge (1) selon la revendication 3, dans lequel la flèche (12) est une flèche télescopique (12') ou une flèche fixe (12) qui est connectée par l'intermédiaire de l'articulation rotative (16') à la flèche inclinable (14, 14").

5. Mécanisme de grue et plate-forme de travail avec un dispositif de détection de charge (1) selon la revendication 4, dans lequel est prévu, entre la flèche télescopique (12') ou la flèche fixe (12) et la flèche inclinable (14, 14"), un cylindre de nivellement qui est conçu pour incliner la flèche inclinable (14, 14") par rapport à la flèche télescopique (12') ou à la flèche fixe (12).

6. Mécanisme de grue et plate-forme de travail avec un dispositif de détection de charge (1) selon l'une des revendications précédentes, dans lequel le capteur d'inclinaison (34) et un capteur d'accélération et/ou est conçu pour déterminer l'inclinaison par rapport à la surface du sol et/ou par rapport à la force d'attraction de la terre.

7. Mécanisme de grue et plate-forme de travail avec un dispositif de détection de charge (1) selon l'une des revendications 4 ou 5, dans lequel le capteur d'inclinaison (34) est un capteur d'angle qui est conçu pour déterminer un angle d'inclinaison entre la flèche télescopique (12') ou de la flèche fixe (12) et la flèche inclinable (14, 14").

8. Mécanisme de grue et plate-forme de travail avec un dispositif de détection de charge (1) selon l'une des revendications précédentes, dans lequel la cellule de charge (30, 30', 30") est disposée au-dessous de ou latéralement par rapport à la plate-forme de travail et est solidaire de la plate-forme de travail, de sorte qu'elle soit inclinée ensemble avec le panier de travail (20, 20").

9. Mécanisme de grue et plate-forme de travail avec un dispositif de détection de charge (1) selon l'une des revendications précédentes, dans lequel le capteur de force (32) et le capteur d'inclinaison (34) sont connectés à un câble de signal commun (38S) et/ou à un câble d'alimentation en énergie commun (38E) avec une unité d'évaluation.

10. Mécanisme de grue et plate-forme de travail avec un dispositif de détection de charge (1) selon l'une des revendications précédentes, dans lequel le capteur de force (32) et/ou le capteur d'inclinaison (34) sont prévus de manière redondante dans la cellule de charge (30, 30', 30").

11. Mécanisme de grue et plate-forme de travail avec un dispositif de détection de charge (1) selon la revendication 10, dans lequel un premier des capteurs de force présents de manière redondante (32) et un premier des capteurs d'inclinaison présents de manière redondante (32) sont connectés par l'intermédiaire d'un câble de signal commun (38S) et/ou d'un câble d'alimentation en énergie commun (38E) à une unité d'évaluation et/ou à une unité d'alimentation en énergie commune, et
dans lequel un deuxième des capteurs de force présents de manière redondante (32) et un deuxième des capteurs d'inclinaison présents de manière redondante (34) sont connectés par l'intermédiaire d'un câble de signal commun (38S) et/ou d'un câble d'alimentation en énergie commun (38E) à l'unité d'évaluation et/ou à une unité d'alimentation en énergie commune.

12. Mécanisme de grue et plate-forme de travail avec un dispositif de détection de charge (1) selon l'une des revendications précédentes, dans lequel le dispositif de détection de charge (1) comporte une unité d'évaluation destinée à évaluer le capteur de force (32) et le capteur d'inclinaison (34).

13. Mécanisme de grue et plate-forme avec un dispositif de détection de charge (1) selon la revendication 12, dans lequel l'unité d'évaluation est conçue pour calibrer, lors d'une opération de calibrage commune, tant le capteur de force (32) que le capteur d'inclinaison (34).

14. Mécanisme de grue et plate-forme de travail avec un dispositif de détection de charge (1) selon la revendication 6, dans lequel le dispositif de détection de charge (1) comporte une unité d'évaluation destinée à évaluer le capteur de force (32) et le capteur d'accélération comme capteur d'inclinaison (34) et dans lequel l'unité d'évaluation est conçue pour identifier, en cas de changement de charge détecté par le capteur de force (32) et d'accélération détectée par le capteur d'accélération se produisant en même temps, une erreur externe.
